# EUROPÄISCHE PATENTSCHRIFT

(11) **EP 1 666 758 B1**
(45) Veröffentlichungstag und Bekanntmachung des Hinweises auf die Patenterteilung: **14.05.2008**
(21) Anmeldenummer: 05025140.4
(22) Anmeldetag: 17.11.2005
(51) Int. Cl.: F16F 1/12, B60G 15/06

(54) **Auflagekörper zur Abstützung eines elastischen Abstützelementes**
Support body for supporting an elastic support element
Corps d'appui pour supporter un élément d'appui élastique

(30) Priorität: 01.12.2004 DE 102004058104
(43) Veröffentlichungstag der Anmeldung: 07.06.2006
(73) Patentinhaber: ThyssenKrupp Bilstein Suspension GmbH, 58256 Ennepetal (DE)
(72) Erfinder: Fritz, Michael, Dipl.-Ing., 58339 Breckerfeld (DE)
(74) Vertreter: Spannagel, Hans-Achim

(56) Entgegenhaltungen:
- DE-A1- 4 119 701
- US-A- 3 444 749
- US-A- 3 717 354
- US-A1- 2002 109 328
- PATENT ABSTRACTS OF JAPAN Bd. 2003, Nr. 12, 5. Dezember 2003 (2003-12-05) & JP 2003 254369 A (TOKAI RUBBER IND LTD; TOYOTA MOTOR CORP; DAIHATSU MOTOR CO LTD), 10. September 2003 (2003-09-10)

## Beschreibung

Die Erfindung betrifft einen ringförmigen Auflagerkörper zur Abstützung eines aus elastischem Material bestehenden, im Einbauzustand unter Druckbelastung stehenden Stützelementes im Bereich eines Federbeines, wobei der Auflagerkörper aus einem Material besteht, welches eine größere Härte aufweist als das Material des Stützelementes und wobei der Auflagerkörper eine Auflagefläche beinhaltet, auf der sich das Stützelement mit einer Gegenfläche abstützt.

Der DE-A 41 19 701 ist eine Stützlagerung, insbesondere eines Kraftfahrzeug-Federbeines, zu entnehmen, mit einer Luftfeder, die mit Wandelementen mit wenigstens einer elastisch verformbaren Wand einen mit einem gasförmigen Stoff gefüllten Hohlraum einschließt und sich mit einem ersten Wandelement an einer Stützwand und mit einem zweiten Wandelement an einem gegenüber der Stützwand relativ verlagerbaren Federungskörper abstützt. Das obere Ende der in einem Außenrohr axial geführten Kolbenstange stützt sich an einem Gummilager luftdicht ab. Die Luftfeder kann von einer Schraubenfeder umgeben sein, die sich beispielsweise jeweils unter Zwischenschaltung eines Dämpfungselementes an einem Ende an einer Stützschulter des Mantelrohres und am anderen Ende an einem Stützring an dem Außenrohr abstützt.

Nachteilig ist hier festzustellen, dass das aus elastischem Material bestehende Dämpfungselement, welches unter der Druckbelastung der Schraubenfeder steht, sich insbesondere bei stärkerer axialer Druckbeanspruchung radial verformen kann, so dass es möglicherweise über die radiale Begrenzungskante des Stützringes hinausragt und unter Umständen sogar abgeschert werden kann.

Dem könnte dadurch entgegengewirkt werden, dass das Stützelement entweder in einer Kammer angeordnet oder aber mit dem Auflagerelement beispielsweise durch Vulkanisation verbunden wird. Einerseits sind derartige Maßnahmen nicht erwünscht und andererseits würden zusätzliche Materialien und Arbeitsschritte notwendig sein, die das Produkt verteuern würden.

Der Erfindung liegt die Aufgabe zugrunde, einen gattungsgemäßen ringförmigen Auflagerkörper dahingehend weiterzubilden, dass infolge der Druckbelastung auf das Stützelement keine das Stützelement schädigende Verformung mehr gegeben ist, so dass sich eine Erhöhung der Standzeit einstellt.

Diese Aufgabe wird dadurch gelöst, dass auf der Oberfläche der Auflagefläche umlaufende und konzentrisch zueinander angeordnete Erhebungen ausgebildet sind, welche einen integralen Bestandteil des Auflagerkörpers bilden, wobei jeweils zwei zueinander benachbarte Erhebungen einen umlaufenden Aufnahmeraum für das elastische Material des Stützelementes begrenzen.

Vorteilhafte Weiterbildungen des Erfindungsgegenstandes sind den Unteransprüchen zu entnehmen.

Das auf der Auflagefläche des beispielsweise aus Stahl bestehenden Auflagerkörpers durch umformtechnische Einprägung erzeugte Profil kann unterschiedlichste Ausgestaltungen haben, wobei von wesentlicher Bedeutung ist, dass Aufnahmeräume für das elastische Material des Stützelementes gebildet werden, so dass im Betriebszustand eine Art Verklammerung oder Hintergreifung zwischen Auflagerkörper und Stützelement erzielt wird, sodass das elastische Material des Stützelementes nicht mehr in Bereiche ausweichen kann, die zu den vorab angesprochenen Beschädigungen desselben führen.

In Abhängigkeit von der Druckbelastung können die Erhebungen Höhen zwischen 0,1 und 0,7 mm, bevorzugt zwischen 0,3 und 0,5 mm, aufweisen.

Besonders vorteilhafte Querschnitte werden durch zackenförmig ausgebildete Erhebungen erzielt.

Einem weiteren Gedanken der Erfindung gemäß, können die zackenförmigen Erhebungen einen unsymmetrischen Querschnitt aufweisen.

Die Erhebungen können, jeweils von den Zackenspitzen aus gesehen, eine radial nach außen hin abfallende Flanke aufweisen, welche weniger steil abfällt als eine radial nach innen abfallende zweite Flanke der Erhebung. Auf diese Weise wird eine höhere abstützende Wirkung der Erhebungen in radialer Richtung nach außen erreicht.

Alternativ besteht auch die Möglichkeit, dass die Erhebungen, jeweils von den Zackenspitzen aus gesehen, eine radial nach außen hin abfallende erste Flanke und eine zweite Flanke aufweisen, welche senkrecht aus der Auflagefläche herausragt. In diesem Fall ist die Stützwirkung der Zacken in radialer Richtung nach außen besonders hoch.

Vorteilhafterweise wird der erfindungsgemäße Auflagerkörper als Federteller für die Aufnahme einer Schraubenfeder eines Kfz.-Federbeines ausgebildet, wobei jedoch auch andersartige Anwendungsmöglichkeiten, beispielsweise im Bereich des Gummilagers des Federbeines, respektive damit peripher zusammenwirkender Bauteile, denkbar sind. Hier können z.B. Schwingungsentkopplungen oder akustische Entkopplungen vorgenommen werden.

Soll der Auflagerkörper nicht aus einem Metall bestehen, besteht die Möglichkeit, selbigen als Kunststoff-Spritzgussteil auszubilden, wobei die Erhebungen durch entsprechende Ausgestaltung des Spritzgusswerkzeuges im Zuge der Herstellung des Auflagerkörpers herausgeformt werden.

Die Anwendung des Erfindungsgegenstandes kann somit im Bereich eines Federbeines gesehen werden, und zwar überall dort, wo Gummi- oder Elastomerscheiben unter Druckbeanspruchung eingesetzt werden. Gemeint sind hierbei auch Toleranzausgleichsscheiben oder Abkoppelelemente akustischer oder mechanischer Art (Geräusch- oder Schwingungsentkopplung).

Gegenüber dem Stand der Technik wird durch das Verhindern des Herausrutschens des Gummis aus dem Bereich des Auflagerkörpers das Stützelement stabilisiert, wodurch dessen Standzeit beträchtlich erhöht werden kann. Die Stabilisierung und Fixierung des Stützelementes wird bei der Erfindung ohne zusätzliche Maßnahmen, wie z.B. Vulkanisieren, erreicht.

Der Erfindungsgegenstand ist anhand eines Ausführungsbeispieles in der Zeichnung dargestellt und wird wie folgt beschrieben. Es zeigen:
- Figur 1: Prinzipskizze eines Federbeinteiles;
- Figuren 2 bis 4: Prinzipielle Darstellung eines Auflagerkörpers in Wirkverbindung mit einem elastischen Stützelement.

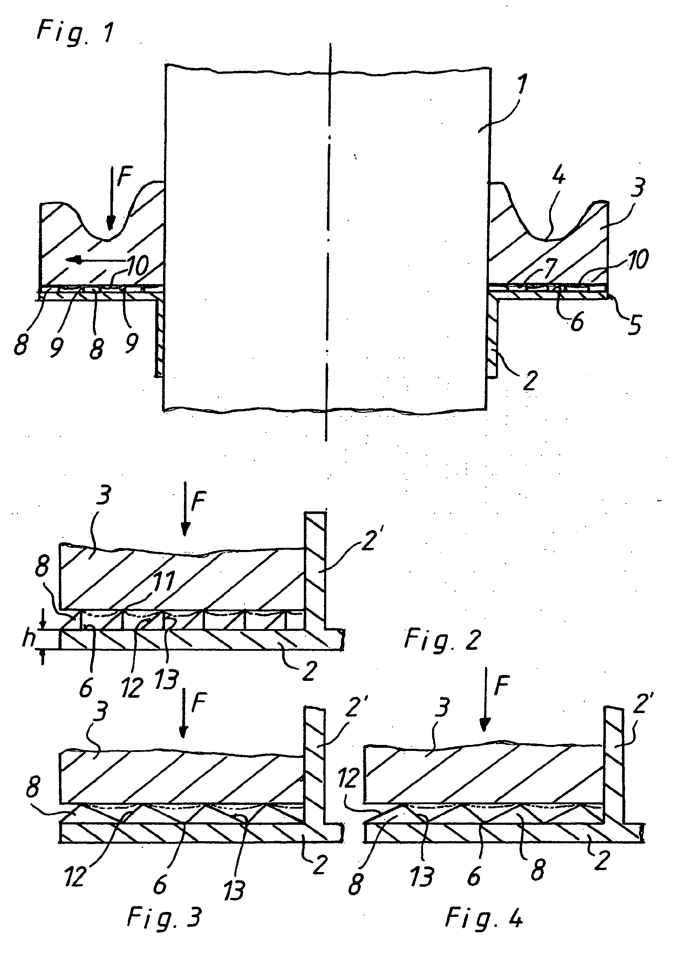

Figur 1 zeigt als Prinzipskizze einen Teilbereich eines Kfz.-Federbeines 1, wie es beispielsweise im Stand der Technik gemäß DE-A 41 19 701 angesprochen ist. Dargestellt ist ein beispielsweise durch Aufschrumpfen oder Schweißen am Federbein 1 befestigter ringförmiger, winkelförmig ausgebildeter Auflagerkörper 2, der in Wirkverbindung mit einem aus elastischem Material bestehenden Stützkörper 3 steht, der in diesem Beispiel Aufnahmebereiche 4 für den Endbereich einer nicht weiter dargestellten Schraubenfeder aufweist. Durch das Bezugszeichen F ist die durch die Schraubenfeder auf das Stützelement 3 ausgeübte Kraft gemeint. Würde hier ein Auflagerkörper, wie im Stand der Technik beschrieben, zum Einsatz gelangen, würde das mit der Kraft F axial belastete elastische Material des Stützelementes 3 radial nach außen gedrückt werden und möglicherweise an der Außenkante 5 des Auflagerkörpers 2 abgeschert werden. Infolge der ständigen Walkarbeit des elastischen Stützkörpers 3 findet relativ schnell eine Materialermüdung und ein Verschleiß statt, wodurch die Standzeit reduziert wird. Hier bestünde nun die Möglichkeit, das Stützelement 3 im Bereich des Auflagerkörpers 2 einzukammern, was jedoch weitere Fertigungsschritte in Verbindung mit damit einhergehenden Kosten mit sich bringen würde. Weitere Nachteile würden dabei das durch die Kammerung erhöhte Gewicht des Auflagerkörpers 2 und der zusätzlich benötigte Bauraum sein. Der Auflagerkörper 2 verfügt über eine Auflagefläche 6, die in Wirkverbindung mit einer Gegenfläche 7 des Stützelementes 3 steht.

Erfindungsgemäß werden auf der Oberfläche der Auflagefläche 6 des Auflagerkörpers 2 Erhebungen 8 ausgebildet, die umlaufend und konzentrisch zueinander angeordnet sind und darüber hinaus integrale Bestandteile des Auflagerkörpers 2 sind. Jeweils zwischen zwei zueinander benachbarten Erhebungen 8 werden umlaufende Aufnahmeräume 9 für das elastische Material des Stützelementes 3 gebildet. Die Erhebungen 8 sollen im dargestellten Beispiel etwa rechteckige Querschnitte aufweisen, so dass die Aufnahmeräume 9 ebenfalls einen rechteckigen Querschnitt besitzen. Lediglich angedeutet ist, wie elastisches Material 10 des Stützelementes 3 in die jeweiligen Aufnahmeräume 9 unter Druckbeaufschlagung zumindest partiell hinein gedrückt wird, so dass das Stützelement 3 in seiner radialen Beweglichkeit nach außen beschränkt ist und radial abgestützt wird.

Die Figuren 2 bis 4 zeigen als Prinzipskizzen ebenfalls Auflagerkörper 2, die in Wirkverbindung mit elastischen Stützelementen 3 stehen, wobei auf der jeweiligen Oberfläche 6 des jeweiligen Auflagerkörpers 2 unterschiedlich gestaltete Erhebungen 8 vorgesehen sind. Abweichend zu Figur 1 sind die Erhebungen 8 mit zackenförmigen Querschnitten versehen und weisen unsymmetrische Querschnitte auf. Ein jeder Auflagerkörper 2 wirkt mit einem im wesentlichen senkrecht verlaufenden Stützbereich 2' zusammen.

Die Erhebungen 8 weisen - jeweils von den Zackenspitzen 11 aus gesehen - eine radial nach außen hin abfallende Flanke 12 und eine dazu unter einem anderen Winkel verlaufende Flanke 13 auf.

In Figur 2 verläuft die Flanke 12 unter einem vorgegebenen Winkel radial nach außen, während die Flanke 13 senkrecht auf der Oberfläche 6 steht. In Figur 3 und 4 verlaufen die Flanken 12,13 unter unterschiedlichen Neigungswinkeln, wobei in Figur 3 die Flanke 12 steiler als die Flanke 13 und in Figur 4 die umgekehrte Version dargestellt ist.

Weitere Alternativen zur Ausgestaltung von Profilen auf der Oberfläche 6 des Auflagerkörpers 6 sind ebenfalls denkbar.

Besteht der Auflagerkörper 2 aus Stahl, können die Erhebungen 8 beispielsweise durch umformtechnisches Einprägen in die Oberfläche 6 des Auflagerkörpers 2 eingebracht werden.

Soll der Auflagerkörper 2 beispielsweise aus Kunststoff bestehen, können in dem zugehörigen Formwerkzeugteil entsprechende Profilierungen eingebracht werden, um unterschiedlichste Konturen, wie sie beispielsweise in den Figuren 1 bis 4 dargestellt sind, zu erzeugen.

Wie bereits angesprochen, können nicht nur die mit Schraubenfedern in Wirkverbindung stehenden Auflagerkörper 2 in entsprechender Weise ausgebildet werden, vielmehr besteht auch die Möglichkeit, andersartige unter Druck stehende, aus unterschiedlichen Materialien bestehende Bauteile, wie sie beispielsweise im Bereich des Gummilagers angeformt sind, in entsprechender Weise auszugestalten. Die hier bisher durch Vulkanisieren angeformten Elastomerteile können dann in geeigneter Form infolge der mechanischen Verklammerung/formschlüssigen Hintergreifung zwischen Auflagerkörper und Stützelement ohne zusätzliche Maßnahmen stabilisiert und fixiert gehalten werden.

### Bezugszeichenliste

- 1: Federbein
- 2: Auflagerkörper
- 2': Stützbereich
- 3: Stützkörper
- 4: Aufnahmebereich
- 5: Außenkante
- 6: Auflagefläche
- 7: Gegenfläche
- 8: Erhebungen
- 9: Aufnahmeraum
- 10: elastisches Material
- 11: Zackenspitze
- 12: Flanke
- 13: Flanke

- F: Druckbelastung (Kraft)
- h: Höhe

## Patentansprüche

1. Ringförmiger Auflagerkörper zur Abstützung eines aus elastischem Material bestehenden, im Einbauzustand unter Druckbelastung (F) stehenden Stützelementes (3) im Bereich eines Federbeines (1), wobei der Auflagerkörper (2) aus einem Material besteht, welches eine größere Härte aufweist als das Material des Stützelementes (3) und wobei der Auflagerkörper (2) eine Auflagefläche (6) beinhaltet, auf der sich das Stützelement (3) mit einer Gegenfläche (7) abstützt, **dadurch gekennzeichnet, dass** auf der Oberfläche der Auflagefläche (6) umlaufende und konzentrisch zueinander angeordnete Erhebungen (8) ausgebildet sind, welche einen integralen Bestandteil des Auflagerkörpers (2) bilden, wobei jeweils zwei zueinander benachbarte Erhebungen (8) einen umlaufenden Aufnahmeraum (9) für elastisches Material (10) des Stützelementes (3) begrenzen.

2. Auflagerkörper nach Anspruch 1, **dadurch gekennzeichnet, dass** die Auflagefläche (6) radial außerhalb der Erhebungen (8) in einen im wesentlichen senkrecht verlaufenden Stützbereich (2') übergeht.

3. Auflagerkörper nach Anspruch 1 oder 2, **dadurch gekennzeichnet, dass** die Höhe (h) der Erhebungen (8), gemessen vom Grund des Aufnahmeraumes (9), zwischen 0,1 und 0,7 mm beträgt.

4. Auflagerkörper nach einem der Ansprüche 1 bis 3, **dadurch gekennzeichnet, dass** die Höhe (h) der Erhebungen (8), gemessen vom Grund des Aufnahmeraumes (9), zwischen 0,3 und 0,5 mm beträgt.

5. Auflagerkörper nach einem der Ansprüche 1 bis 4, **dadurch gekennzeichnet, dass** die Erhebungen (8) einen zackenförmigen Querschnitt aufweisen.

6. Auflagerkörper nach einem der Ansprüche 1 bis 5, **dadurch gekennzeichnet, dass** der Auflagerkörper (2) aus Stahl besteht und die Erhebungen (8) in die Oberfläche der Auflagefläche (6) umformtechnisch eingeprägt sind.

7. Auflagerkörper nach einem der Ansprüche 1 bis 6, **dadurch gekennzeichnet, dass** der Auflagerkörper (2) ein aus Kunststoff bestehendes Spritzgussteil ist und die Erhebungen (8) durch entsprechende Ausgestaltung des Spritzgusswerkzeuges im Zuge der Herstellung des Auflagerkörpers (2) gebildet sind.

8. Auflagerkörper nach einem der Ansprüche 1 bis 7, **dadurch gekennzeichnet, dass** die zackenförmigen Erhebungen (8) einen unsymmetrischen Querschnitt aufweisen.

9. Auflagerkörper nach einem der Ansprüche 1 bis 8, **dadurch gekennzeichnet, dass** die Erhebungen (8) - jeweils von den Zackenspitzen (11) aus gesehen - eine radial nach außen hin abfallende erste Flanke (12) aufweisen, welche weniger steil abfällt als eine radial abfallende zweite Flanke (13) der Erhebungen (8).

10. Auflagerkörper nach einem der Ansprüche 1 bis 9, **dadurch gekennzeichnet, dass** die Erhebungen (8) - jeweils von den Zackenspitzen (11) aus gesehen - eine radial nach außen hin abfallende erste Flanke (12) und eine zweite Flanke (13) aufweisen, welche senkrecht aus der Auflagefläche (6) herausragt.

11. Auflagerkörper nach einem der Ansprüche 1 bis 10, **dadurch gekennzeichnet, dass** der Auflagerkörper (2) als Federteller für die Aufnahme einer Schraubenfeder eines Kfz.-Federbeines ausgebildet ist.

## Claims

1. An annular support body for supporting a support element (3) made of elastic material and being under compression (F) in the mounted condition in the area of a Mc Pherson strut unit (1), wherein the support body (2) is made of a material that presents a greater hardness than the material of the support element (3) and wherein the support body (2) includes a supporting surface (6), on which the support element (3) rests with a counter-surface (7), **characterized in that** elevations (8) that are placed in a concentric manner with respect to each other and are surrounding the surface of the supporting surface (6) are formed, which are an integral element of the support body (2), wherein respectively two elevations (8) adjacent to each other limit a surrounding reception space (9) for the elastic material (10) of the support element (3).

2. A support body according to claim 1, **characterized in that** the supporting surface (6) changes radially outside the elevations (8) into a support area (2') that essentially extends vertically.

3. A support body according to claim 1 or 2, **characterized in that** the height (h) of the elevations (8), measured from the ground of the reception space (9), is comprised between 0.1 and 0.7 mm.

4. A support body according to one of the claims 1 through 3, **characterized in that** the height (h) of the elevations (8), measured from the ground of the reception space (9), is comprised between 0.3 and 0.5 mm.

5. A support body according to one of the claims 1 through 4, **characterized in that** the elevations (8) comprise a tooth-shaped cross section.

6. A support body according to one of the claims 1 through 5, **characterized in that** the support body (2) is made of steel and the elevations (8) are impressed in a deforming manner into the surface of the supporting surface (6).

7. A support body according to one of the claims 1 through 6, **characterized in that** the support body (2) is an injection moulded part made of plastic and the elevations (8) are formed by means of a corresponding design of the injection moulding tool in the course of the manufacture of the support body (2).

8. A support body according to one of the claims 1 through 7, **characterized in that** the tooth-shaped elevations (8) have an asymmetric cross section.

9. A support body according to one of the claims 1 through 8, **characterized in that** the elevations (8), respectively seen from the tooth points (11), comprise a first flank (12) that radially falls outwards and that has a less steep inclination than a second flank (13) falling radially inwards of the elevations (8).

10. A support body according to one of the claims 1 through 9, **characterized in that** the elevations (8), respectively seen from the tooth points (11), comprise a first flank (12) radially falling outwards and a second flank (13) projecting vertically from the supporting surface (6).

11. A support body according to one of the claims 1 through 10, **characterized in that** the support body (2) is formed as spring plate for receiving a helical spring of a Mc Pherson strut unit of a motor vehicle.

## Revendications

1. Corps d'appui annulaire pour supporter un élément d'appui (3) en matière élastique et étant sous contrainte de compression (F) dans l'état installé au niveau d'une jambe de force à ressort (1), le corps d'appui (2) étant composé d'une matière qui présente une plus grande dureté que la matière de l'élément d'appui (3) et le corps d'appui (2) comprenant une surface d'appui (6) sur laquelle s'appui l'élément d'appui (3) avec une contre-surface (7), **caractérisé en ce que** des élévations (8) entourant la surface de la face d'appui (6) et étant disposées de manière concentrique les unes par rapport aux autres sont prévues, qui forment un élément intégré du corps d'appui (2), respectivement deux élévations (8) voisines limitant un espace de réception (9) entourant pour la matière élastique (10) de l'élément d'appui (3).

2. Corps d'appui selon la revendication 1, **caractérisé en ce que** la surface d'appui (6) passe à une zone de support (2') essentiellement perpendiculaire, radialement à l'extérieur des élévations (8).

3. Corps d'appui selon la revendication 1 ou 2, **caractérisé en ce que** la hauteur (h) des élévations (8), mesurée à partir du fond de l'espace de réception (9), est comprise entre 0,1 et 0,7 mm.

4. Corps d'appui selon l'une des revendications 1 à 3, **caractérisé en ce que** la hauteur (h) des élévations (8), mesurée à partir du fond de l'espace de réception (9), est comprise entre 0,3 et 0,5 mm.

5. Corps d'appui selon l'une des revendications 1 à 4, **caractérisé en ce que** les élévations (8) comprennent une section transversale sous forme de dents.

6. Corps d'appui selon l'une des revendications 1 à 5, **caractérisé en ce que** le corps d'appui (2) est en acier et les élévations (8) sont impressionnées de manière déformante dans la surface de la face d'appui (6).

7. Corps d'appui selon l'une des revendications 1 à 6, **caractérisé en ce que** le corps d'appui (2) est une pièce moulée par injection en plastique et les élévations (8) sont formées par la confection correspondante de l'outil de moulage par injection au cours de la fabrication du corps d'appui (2).

8. Corps d'appui selon l'une des revendications 1 à 7, **caractérisé en ce que** les élévations (8) sous forme de dents comprennent une section transversale asymétrique.

9. Corps d'appui selon l'une des revendications 1 à 8, **caractérisé en ce que** les élévations (8) - respectivement vues à partir des pointes de dent (11) - comprennent un premier flanc (12) descendant radialement vers l'extérieur, dont l'inclinaison est moins escarpée que celle d'un deuxième flanc (13) descendant radialement des élévations (8).

10. Corps d'appui selon l'une des revendications 1 à 9, **caractérisé en ce que** les élévations (8) - respectivement vues à partir des pointes de dent (11) - comprennent un premier flanc (12) descendant radialement vers l'extérieur et un deuxième flanc (13) qui fait saillie perpendiculairement de la face d'appui (6).

11. Corps d'appui selon l'une des revendications 1 à 10, **caractérisé en ce que** le corps d'appui (2) est formé comme cuvette de ressort pour recevoir un ressort à boudin d'une jambe de force à ressort de véhicule à moteur.
